# EUROPEAN PATENT SPECIFICATION

(11) **EP 4 385 196 B1**
(45) Date of publication and mention of the grant of the patent: **28.10.2026**
(21) Application number: 22782960.3
(22) Date of filing: 11.08.2022
(51) Int. Cl.: H04L 67/00, H04L 67/141, H04W 76/10

(54) **SYSTEM AND METHOD OF INTEGRATING STANDARD AND NON-STANDARD NETWORK SERVICES**
SYSTEM UND VERFAHREN ZUR INTEGRATION VON STANDARD- UND NICHTSTANDARD-NETZWERKDIENSTEN
SYSTÈME ET PROCÉDÉ D'INTÉGRATION DE SERVICES DE RÉSEAU STANDARDS ET NON STANDARDS

(30) Priority: 11.08.2021 US 202163231837 P
(43) Date of publication of application: 19.06.2024
(73) Proprietor: Shabodi Corp, Mississauga, ON L6Z 1S1 (CA)
(72) Inventor: GEEKEE, Harpreet, Oakville, Ontario L6H 4C3 (CA); KAMRAN, Raghav, Bangalore 560077 (IN); CHOPRA, Vikram, Toronto, Ontario M5V 2J5 (CA)
(74) Representative: Bauer, Marcus
(86) International application number: PCT/IB2022/057519
(87) International publication number: WO 2023/017466

(56) References cited:
- WO-A1-2020/069036
- US-A1- 2017 141 973

## Description

### Technical Field

This application relates generally to a network element for instructing the configuration of a connection, and more particularly to a network element that, in conjunction with a request received over the user plane, generates network configuration instructions associated with the connection between the UE and and an application for implementation by management plane and/or control plane entities.

### Background

The evolution of wireless communication networks has resulted in the deployment of Fifth Generation (5G) wireless networks.5G networks provide a number of improvements over the previous generation of wireless networks, among them is the ability to support differentiated levels of service throughout the network. This can be done in any number of different ways. In the Radio Access Network (RAN), which is typically defined as the part of the network that supports the air interface and is thus often viewed as the network of 5G Node B (gNB), differentiated service is often provided through the dedication of different Data Radio Bearers (DRBs) to different Quality of Service (QoS) characteristics. In the network core (also referred to as the core network or the packet core) differentiated levels of service may be provided through the use of network slicing. Network slicing allows a common set of network resources to be used as a substrate for a variety of independent networks and allows for the creation of isolated virtual networks over which different traffic flows can travel. Different network slices may have different network topologies, different capacities, latencies and ability to support different types of network traffic. Network slicing allows a network operator to support different services that require very different characteristics without having to support each service on the same network by over provisioning resources to each connected device so that the needs of each service are properly supported.

In some implementations,an end-to-end slicing can be offered through an allocation of different sets of DRBs to different network slices. Thus, all traffic received over a given DRB is immediately known to be associated with a specific network slice. Conversely, all traffic received at the gNB from a particular network slice can be transmitted over an associated downlink channel.

In the network standardization process, network equipment manufacturers, user equipment manufacturers and network operators take care to ensure that there is interoperability between devices. Typically, this has focussed on the ability of a standards compliant User Equipment to connect to a base station regardless of who manufactured either node. As networks became more advanced, it became important to also define the interactions between components within the core network, to allow for core networks to be heterogeneous networks. However, the 5G network defines a role of User Plane Functions (UPF), which are accessed by the user and reside within the Core Network. Where the network operator is providing the service supported by an application or UPF the characteristics of the network slice can be configured to support the needs of the application. However, standardization has not been directed to allowing an application, particularly an application outside of the core network, to define the connectivity requirements (or other application specific requirements such as network capability allocations) for the rest of the network. Similarly, standardized management and control plane entities lack interfaces that allow a network application, outside of the network core, to easily transmit requests for either configuration modifications or adjustments in network capability allocations in view of application requests or requirements, without in depth knowledge of the network configuration. If a single application is providing a service to users of different network slices, or different networks, there is no standardized mechanism to allow either the user or the application to select the characteristics of the network used to connect the UE to the application.

Accordingly, it may be beneficial to provide a user or an application a mechanism to provide characteristics that can be used to define the characteristics of the connection between the UE and the application. As of Release 17 of the 3GPP 5G standards there is no standardized mechanism designed to allow a network accessible application to define or modify any of the QoS network allocations, or other parameters of the intervening network that would have an impact on the apparent connectivity between the UE and the network application There has been discussion of allowing a UE to participate in resource allocation negotiations, but as will be discussed below, this is insufficient in many situations. Notions of using the UE as a proxy for the application typically stem from the fact that to connect to the network, the UE must authenticate with the network, and is thus somewhat known and trusted. In 3GPP Release 17, applications outside the operator network are not considered to be trusted entities. From the perspective of the network, the UE connects to a network using a DRB that is associated with a QoS. The UE accesses the application over this connection. If the connection is underprovisioned, there is no simple mechanism to allow the UE to make this determination automatically. From the perspective of the application, there may be a number of different users, each of whom may be connecting over different network slices, and using different access networks. Such a scenario will mean that the user will have information associated with a desired QoS, but no information about how to enable such a connection. The network operator will only see traffic flowing to the application or application server over its connections, so the carrier will not understand the need to adjust a given connection. The Application itself will have information that can be used to identify how to best serve a number of different connections, but unless the application is implemented by a carrier or provided access to carrier information, this information is not currently usable. Each different network provider may have information that is useful to the application, but this information will be opaque to the application. As such, the ability for the application service provider or the network service provider to properly provision the connection is limited under current standardization methods and services.

This makes development and support of applications difficult in a 5G environment, as the application developer may design the application to be run under defined conditions, but in the execution environment there may be no manner in which to ensure that the UE accessing the application has a connection that meets the defined conditions. Thus, an application has no ability to determine the QoS of the UE connected to it, nor does it have a mechanism that allows it to specify a QoS for the UE. (Although discussed in this example as being associated with the QoS, it should be understood that this is a simplified example, and other configurable parameters including resource allocations of the application service provider and network operator are opaque to each other.) To make matters more complicated, if a single application is designed to support connections from a plurality of different networks, the application may have no mechanism to determine which network or network slice the UE has connected over.

This introduces an incredible amount of complexity for the application to manage, none of which is apparent to the UE. Accordingly, a UE that does not have an appropriate QoS, or that is communicating with the application over a DRB that is misclassified, will experience an unexplained poor level of service. This results in a poor quality of experience.

WO 2020/069036 A1 describes a Third Generation Partnership Project (3GPP) management system operable for peer-to-peer (P2P) edge computing in a fifth generation (5G) computing network, which can be configured to identify a user plane function based on quality of service requirements.

US 2017/141973 A1 describes a method for generating a network slice comprising a network slice orchestrator receiving from a network slice manager a request for a new network slice, the network slice orchestrator adding a new service to the new network slice, the network slice orchestrator determining a network slice descriptor for the new network slice, the network slice orchestrator transmitting to a resource orchestrator a request for an instantiation of the network slice using enhanced network function virtualization management and orchestration.

### Summary

It is an object of the aspects of the present invention to obviate or mitigate the problems of the above-discussed prior art. The invention is defined by the appended independent claims. Preferred embodiments are defined by the dependent claims.

In a first aspect of the present invention, there is provided a method for generating configuration information associated with a network element. The method comprises the steps of receiving a connection configuration request associated with an application executed on a UE, and at least one of an application server, a network connecting the UE to the application server, and a node or network function within the network; transmitting, towards a network element associated with the received connection configuration request, configuration information determined in accordance with the received connection configuration request.

In an embodiment of the first aspect of the present invention, the connection configuration request is transmitted by one of the UE, the application server, a proxy for the UE and a proxy for the application server. In another embodiment, the connection configuration request is transmitted by the application server. In a further embodiment, transmitting towards the network element comprises transmitting a request to configure the network element to a network function within a management plane. In another embodiment, transmitting towards the network element comprises transmitting a request to configure the network element to a management or control plane network function and optionally, the request to configure is transmitted to a network orchestrator via a management plane entity. In another embodiment, transmitting a determined UE configuration towards the UE. In another embodiment, the method further comprises receiving a connection configuration request from the UE, and transmitting towards the UE a UE configuration determined in accordance with the configuration request received from the application server. In another embodiment, transmitting configuration information comprises transmitting to each of a plurality to network elements, configuration information associated with a respective one of the plurality of network elements.

In some embodiments, the method is carried out outside of a network in which the network element resides. The network in which the network element resides may optionally be a core network of a 3GPP compliant network. The network in which the network element resides may be a radio access network, which itself may be 3GPP compliant.

In accordance with an aspect of the present invention, there is provided a method for configuring a connection within a managed network. This connection can be a newly created connection, or it may be an existing connection being reconfigured. The method comprises receiving, from a node through a connection outside a managed network, a request associated with a connection between nodes within the managed network; generating, at an application description function, in accordance with the received request, configuration information associated with the connection; and transmitting, towards a network element associated with the connection, a configuration request associated with the generated configuration information.

In an embodiment of this aspect, the request received from the node outside the managed network is formatted in accordance with an outward facing Application Programming Interface. In another embodiment, the connection configuration request is received from one of an application server, a user equipment node connected to the managed network, a proxy for the application server and a proxy for the user equipment node. In a further embodiment, the configuration request is formatted in accordance with an Application Programming Interface (API) associated with the network element, and optionally the API is different than an outward facing API associated with the received request.

In another embodiment, the request from the node outside the managed network is received over the data plane of a network other than the managed network. In some embodiments, the network element associated with the connection is within one of a control plane of the managed network and a management plane of the managed network. In a further embodiment, transmitting the configuration request towards the network element comprises transmitting the configuration request to a second network element within one of a control plane of the managed network and a management plane of the management plane, and optionally, the configuration request is transmitted towards a network orchestrator via a network entity in a management plane

In some embodiments, the configuration request is transmitted towards a user equipment (UE) node connected to the managed network, and wherein the configuration request is a request for configuration of a connection associated with the UE. Optionally, the received request is received from the UE and wherein the configuration request is determined in accordance with a second request received from an application server outside the managed network. In another embodiment, wherein the received request is associated with a connection between the UE and the application server.

In another embodiment, generating configuration information comprises generating a set of configuration information data, each of the set associated with a different network element within the managed network; and transmitting a configuration request comprises transmitting to each of the different network elements a configuration request associated with the corresponding subset of the configuration information.

In another embodiment, generating the configuration information further comprises generating a Quality of Service Flow Indicator (QFI) associated with the connection. In other embodiments, the managed network is one of a 5G core network, a 5G Radio Access Network, an Edge Computing Network, a 4G core network, a radio access network, and a Wi-Fi network.

In another embodiment, the connection between nodes within the managed network comprises a plurality of connections spanning different managed network segments. Optionally, connections in the plurality of connections comprise at least one of: a connection between a UE and a base station; a connection between a UE and a radio access point; a connection between a UE and a gNodeB; a connection between the gNodeB and a User Plane Function (UPF); a connection between the gNodeB and a gateway; a connection between two UPFs, and a connection between a gateway and a UPF.

In another embodiment, the connection between nodes within the managed network comprises a connection associated with an Internet of Things (loT) device.

In another aspect of the present invention, there is provided an Application Definition Function (ADF) for generating configuration requests associated with connections within a managed network in accordance with requests received from outside the managed network. The ADF comprises a first and second network interfaces, along with a processor. The first network interface allows the ADF to receive requests from outside the managed network. The second network interface allows the ADF to transmit requests to a network element within the managed network. The processor can execute instructions stored on a computer readable medium that when executed cause the ADF to carry out the above described method of the previous aspects along with each of the embodiments.

### Brief Description of the Drawings

Embodiments of the present invention will now be described in further detail by way of example only with reference to the accompanying figure in which:
Figure 1 illustrates a model for connecting UE based applications to network entities;
Figure 2 illustrates a further model for connecting applications to network entities;
Figure 3 illustrates an embodiment of a network architecture for using an ADF to enable connectivity;
Figure 4 illustrates an embodiment of an API stack for use in allowing applications to negotiate resource allocations with a network control or management entity;
Figure 5 is a graph showing the relationship between different sets of data and the owners of these data sets;
Figure 6 is a network call flow diagram illustrating a method of messaging according to an embodiment of the present invention;
Figure 7 is a block diagram illustrating a connectivity model according to an embodiment of the present invention;
Figure 8 is a network call flow diagram illustrating a method of messaging according to an embodiment of the present invention;
Figure 9 is a flow chart illustrating a method of configuring a network element according to an embodiment of the present invention;
Figure 10 is a flow chart illustrating a method of requesting configuration of a network element according to an embodiment of the present invention; and
Figure 11 is a block diagram illustrating a functional view of an application definition function according to an embodiment of the present invention.

In the above described figures like elements have been described with like numbers where possible.

### Detailed Description

In the instant description, and in the accompanying figures, reference to parameters may be made. These parameters are provided for the enablement of a single embodiment and should not be considered to be limiting or essential. It should be understood that the parameters discussed below are used for the sake of explaining an embodiment. It is not intended to convey either that particular parameters are essential, nor is the following discussion intended to be exhaustive in discussing the parameters upon which the Application Definition Function will operate.

In dynamic networks, such as 5G networks, the network can be configured to serve any of a number of different needs. When a UE connects to a network based application, there may be a number of networks through which traffic may flow. Each of these networks has multiple network elements that can be configured to support the connection. Those skilled in the art will appreciate that a variety of different configuration parameters can be established for each network element. In the discussion below, both network slicing and QoS will be discussed. In other embodiments, different configuration parameters may be used. As an example, in some embodiments, power consumption parameters of the network element may be specified if the network connection is intended to be prioritized for an eco-friendly application. In another example, the configuration parameters may be associated with processing capacity at given nodes within the connection path (also referred to as compute resources), which can allow for a customized service function chain to be enabled so that traffic can be subjected to appropriate network analysis and processing, In the following discussion configuration parameters will be discussed with a focus on setting up a Quality of Service guarantee for traffic between the UE and an application server. It should be understood that this discussion is intended to be explanatory, and is an example. The following discussion should be understood to not be limiting.

In a 5G network, varying levels of service can be provided. It may be possible for the radio edge to provide one set of differentiated levels of service, and for the core network to provide another set of differentiated levels of service. In some examples, these levels of service may be associated with a QoS guarantee. In some networks, different QoS levels may be associated with different network slices.

The use of network slices allows for differentiated levels of service to be offered, without requiring all connections to be provisioned for the highest level of service. For example, a 5G network handset designed to allow a user to stream and download content while moving through the network, and a stationary device intended for use in a smart-grid that only intermittently generates low levels of traffic, are both UEs. However, they have very different needs in terms of both bandwidth and mobility configuration and consumption. Instead of provisioning each device to consume the same resources, these devices can be supported using different network slices. Each slice may be specifically designed to support the traffic needs of the intended UEs. Similarly, it may be advantageous for a network operator to support two different network configurations for different UEs within the same class of device. For example, two users with identical UEs may have different needs pertaining to latency and bandwidth. A first network slice may be designed to carry low-latency traffic associated with real-time communications, while a second slice may be designed for larger amounts of data transfer with less concern for latency. An application designed for one of these slices may not do an acceptable job of supporting a UE that connects over the other slice. In some examples, there may be a third type of slice, designed for both low latency and high bandwidth, but it may be more expensive for a user to access. A UE whose subscriber has paid for access through this slice may be well served in connecting to the application through this slice, though it may be more expensive than necessary. Because standardization bodies, like the 3GPP, typically focus their efforts on the standardization of the interaction between a UE and an element within the network operator network, or between two elements within the network operator network, the focus of allowing adjustments in network resource allocations are typically focussed either on nodes within the network operator network (which can typically interact with control plane network functions), or on the UE. Although through communication with control plane entities such as an AMF or SMF, a UE could request different a QoS or a different allocation of network services, it is an inefficient situation. An Application Server may want a particular allocation of network resources, but the network may be able to provide such an allocation. If the UE makes a request on behalf of the application, it becomes a node in the middle of a negotiation. By allowing an application to interact with the network elements without a UE in place, the application is better served to negotiate a modified resource allocation, and it may be able to identify an otherwise sub-optimal network resource allocation that can become very usable through a modification to the configuration of application resources.

Management and creation of network slices within a 5G network often rely upon network virtualization technologies that are considered common in the computing industry. Network Function Virtualization (NFV) allows network functions to be created within the network slices. In some embodiments, NFV is used to create a completely virtual network entity, specific to that slice, on general purpose computing hardware, while in other embodiments, a dedicated network function using specialized hardware resources is used with different slices of the network function being allocated to different slices of the network. The use of NFV allows for the virtualized function to be configured to meet the needs of the particular network slice. As the needs of a slice increase, the virtualized function can be allocated new resources to expand the function, or a new instance of the function can be introduced allowing for different network designs and architectures to be implemented.

The configuration of parameters within a virtual network can also be performed for the network connections. Changes in the bandwidth allocated to a connection, or to the latency between virtual nodes can be made through entities within the control plane of the 5G network. Management and Orchestration (MANO) functions may be used in the instantiation of virtualized functions within the network. However, access to these functions is generally considered to be off-limits to anyone other than the network operator for both security and reliability reasons.

The Third Generation Partnership Project (3GPP) is the organization responsible for setting out the standards under which a 5G network operates. 3GPP specifications have set out standards for how a UE connecting to a 5G network is supposed to handle the different QoS levels that may be offered. It has also set out exemplary QoS allocations that many operators have adopted, with the notion that these QoS allocations should address the necessary QoS levels. Applications can be designed with these QoS levels in mind, but it may be difficult for the application to determine the QoS level of different UEs that may be connecting through different networks and network slices.

SA2 and SA5 are 3GPP subgroups that define, respectively, the network functions on the control plane and how they configure the user plane connections, topology and functions, and the management plane and its respective functions. Functions on the Management Plane are used by a network operator to define business and charging rules, that can then be turned into rules and network elements that are created and enforced by control plane entities. Typically, these entities are only visible to a network operator. The UE may have limited exposure to a Control Plane Entity, and even then only for short periods of time, and
will not see the existence of Management Plane Entities. SA6 is a 3GPP standardization subgroup that is focussed on enabling support for Mission Critical applications and enablement of application access to the network.. Typically this standardization is directed to the support for mission critical applications within (or with access to the control plane of) a network operator network. Because each network element within the network operator network has a different set of configuration parameters, the overall set of configuration parameters is incredibly large. An application server outside the operator network has no mechanism to handle this effectively, or to even properly gain access to sufficient information about a plurality of different network operators that may be used by users for access.

From the perspective of a network operator, defining a relatively small number of QoS levels is convenient. It reduces the complexity of the networks, and allows for simplified radio management, network engineering and device connection mechanisms. Applications within the network can be allocated QoS rules by a control plane entity such as the Access and Mobility Management Function (AMF). A core network with reduced complexity allows for easier validation, and is reflected by a limited number of Software Defined Function (SDF) templates.

These configurations and simplifications were designed, as noted before, by 3GPP discussions which are driven by Access and Core Network equipment vendors and network operators. UE manufacturers are typically only interested in air interface parameters, and so they may participate and drive discussions in those areas. They may be interested in how the UE will be provided information associated with a QoS, but they do not tend to be interested in further details. Thus, the rules and modes of operation are typically defined by network operators, without consideration for the developers of applications that will reside within the network. This has resulted in a network architecture that makes assumptions about the nature of network applications based not on the capabilities of the 5G networks, but instead are based on the use cases designed for previous generations of networks. Where previous generations of networks did not account for so-called Over-The-Top (OTT) applications, which are applications that are simply accessed by the user over top of the network connectivity provided, 5G networks can, if configuration is possible, enable applications that reside within the network and engage the network operators in provision of services. These applications can be more tightly coupled to the 5G networks, but to enable this, the application must be able to be supported with connections with a QoS level that meets the need of the application. To make it sufficiently user friendly, the application should not overload the user with technical information that must then be matched up to service offerings from a mobile network operator. A mechanism for the application to ensure that the UE is provided the required QoS level is needed. Involvement of the UE or an application in selecting a QoS level are largely outside the scope of the standards set by SA2 and SA5 which are focussed on the needs of the operator, not of the application to which the operator provides access.

Although discussed here in the context of a 5G network, it should be understood that a core network may be configured according to a number of different standards, including those of the Long Term Evolution (LTE) standards, while a number of different radio access technologies can be supported, including 5G Radio Access (5G New Radio), 4G Radio Access (also referred to as LTE), and WiFi. Network resources, in either the core network or the RAN may also include so-called edge computing networks.

To provide applications with the ability to contribute or control the service levels provided to a UE, which has already connected to the network, an out-of-band connection management layer is proposed. This connection management function allows for applications to provide network requirements, for these provided network requirements to be validated against existing QoS levels (such as the QoS levels defined in standards, and possibly supplemented by additional QoS levels), and given an acceptable match, forward a request for these network requirements to an Software Defined Network (SDN) Controller that can provide a UE-to-Application network connection that meets (and possibly exceeds) these requirements or to adjust the existing connection so that it meets (and possibly exceeds) these requirements.

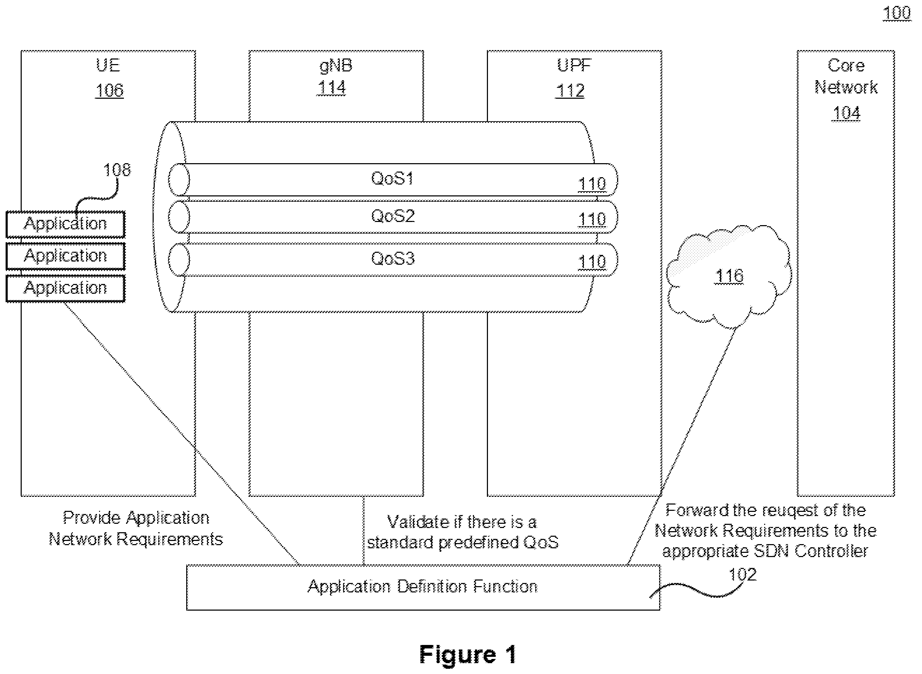

As illustrated in Figure 1 this can be accomplished in a network **100** through the use of network accessible Application Definition Function (ADF) **102.** It should be understood that in some embodiments, the ADF **102** can be a function within a 5G core network **104** that is accessible to UEs **106** and applications **108** that reside within the same network as the ADF **102.** In other embodiments, UEs **106** and Applications **108** can interact with an ADF **102** that is not restricted to being embedded within the same network as either the UE **106** or the application **108.** In this embodiment, the ADF **102** may need a relationship with a core network **104** so that it can determine the available QoS levels **110.** The ADF **102** would need to also be able to determine a network identifier from UE specific information provided by the application **108** (which may be resident on the internet, but may also have a component that is resident on the UE **106).** It should be understood that the different QoS Flow Identifiers (QFIs) can each terminate at a single point, such as the endpoint of the gNB tunnel. At this point, packets are transported over either the radio edge or through a core network **104** (depending on the particular end of the flow). The ADF **102,** being provided information about the core network functionality and configuration, can allow for configuration of the terminating UPF **112** to automatically affix MPLS labels so that traffic can be routed in accordance with the application requirements. The instruction of the UPF configuration can be accompanied by a BGP message to aid in integration. It should be understood that the use of MPLS is for the purposes of explanation and examples. Other routing protocols, such as Source Routing, could be used to similar effect. In environments where at least part of the network is provided makes use of a Metro Ring Protocol-based network, similar directives and procedures can be enacted to influence the traffic flow and treatment, within the bounds of what the network permits. This discussion of alternate protocols is intended to provide examples, and is not to be taken as an exhaustive recitation of the network architectures and protocols that can be used.

The ADF **102** may be provided with a full set of QoS levels that are supported by the network, allowing the ADF **102** to select the appropriate QoS **110.** In other embodiments, the ADF **102** may submit a request including an indication of various QoS characteristics it requires for a connection, and will receive in response a QoS level selected by the network **110** in accordance with the supplied QoS characteristics. In Figure 1 the ADF **102** is shown communicating with a gNB **114.** It should be understood that the ADF **102** may communicate with a gNB **114** to determine which QoS levels **110** are supported by the gNB **114,** especially in networks in which different segments of the network provide support for different sets of QoS levels. It should also be understood that in some embodiments, the ADF **102** may communicate with another network node, and may simply identify either a geographic region, or may more precisely identify a region using an identifier for a particular gNB. In this manner, the ADF **102** can have a simplified communication structure, where it communicates with a single network entity (or a smaller set of network entities) but can obtain information about the QoS levels **110** offered by each gNB **114.** It should be understood that in a network **100** in which the RAN is sliced, the gNB **114** may be a virtual entity specific to a particular slice. This may be implemented using an edge computing platform providing a virtualized gNB, or by a physical gNB that is providing a virtualized entity through slicing. If a virtual gNB is identified, it should be understood that the underlying device that provides these features may provide a number of additional QoS levels, but this is immaterial as they are not offered by the virtual gNB in question. To all devices outside the control or management planes, the virtual gNB will be indistinguishable from a physical gNB. It should be understood that in some embodiments, an LTE compliant eNodeB (eNB) may be connected to a 5G Core Network **104.** The ADF **102** can be used to ensure configuration of the traffic leaving the eNB so that its traffic is formatted and directed to the appropriate 5G Core Network element. 5G standardization was designed to create a 5G RAN separate from a 5G Core Network, with the assumption that the 5G RAN would be likely deployed before a 5G Core. However, due to a number of factors, including a delay in the allocation of 5G spectrum, 4G RANs are being connected to 5G Core Networks. The configuration of eNBs in the 4G RAN to connect to a dynamic 5G Core Network is difficult, but through the use of the ADF **102,** an entity within the 5G Core Network can provide the dynamic updates needed to the eNBs without having the expose interfaces that may have security implications.

When the ADF **102** has identified and selected the appropriate QoS level for this session between the UE **106** and the network based portion of application **108,** ADF **102**can transmit a request, which may identify at least one of the UE **106** and the application 108, to an SDN controller **116** in the network. Those skilled in the art will appreciate that some networks may provide a single interface node for the ADF **102** to communicate with. This allows all requests for gNB information, and all requests for connections directed to an SDN controller **116,** to be authenticated or verified at a single function. This function may act as an authenticator and a proxy for the requests. The function would receive, authenticate and then forward the requests. It may generate the responses to requests on its own, or it may receive the responses from other functions within the network and forward them on to the ADF.

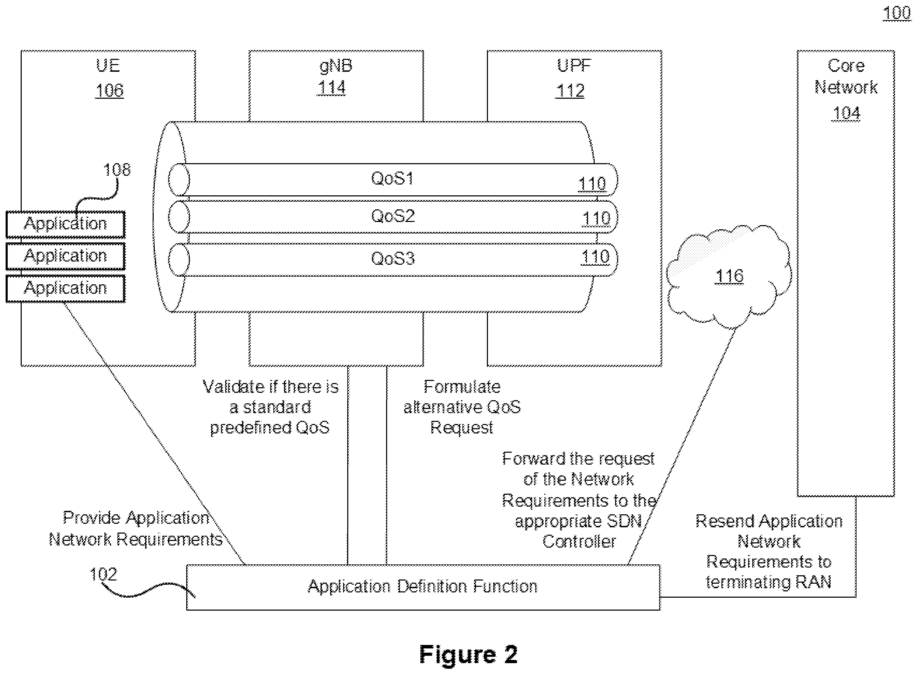

In Figure 2 a process is illustrated that may be followed when a desired QoS level is not available, or when a more relevant QoS level is available. As before, an instance of the application **108** associated with the UE **106** interacts with the ADF **102** to provide network requirements associated with the application **108.** The ADF **102** can then send a message to interrogate whether the gNB **114** supports the desired QoS level **110.** Based on the results, the ADF **102** can formulate an alternative QoS request. In some embodiments this may allow for a more appropriate QoS level than the initially requested QoS level to be selected. This reformulated request may be sent to gNB **114** (or to the appropriate proxy as discussed above) for confirmation, and then forwarded to the SDN controller **116** (or appropriate proxy). A Core Network entity may, in response to the request transmitted towards the SDN controller **116,** transmit Application network requirements to nodes within or associated with the terminating RAN. Those skilled in the art will appreciate that different QoS levels **110** may be associated with the radio access connection between the gNB **114** and UE **106,** but they may also be associated with a connection spanning between the gNB **114** and the application **108** and also the far-end devices on the other end of the back haul. This procedure can allow for an end to end connection to be provisioned between the UE **106** and the network portion of application **108** that satisfies the connection requirements of the application **108.** Where a 5G network **100** is typically able to provide a connection that satisfies a set of reasonable requirements, the problem of how an application not created by the network operator is able to ensure the provisioning of the network is addressed by having an ADF **102** interact with network entities to allow for this provisioning.

It should be understood that in some embodiments, a network controller may transmit to the UE **106** a re-attach request that instructs the UE **106** to connect to a different network slice, or connect through a different DRB. In this way, even when the UE **106** has connected to a network slice that cannot support the required connection requirements, the network **100** can ensure that the UE-Application connection can be satisfied.

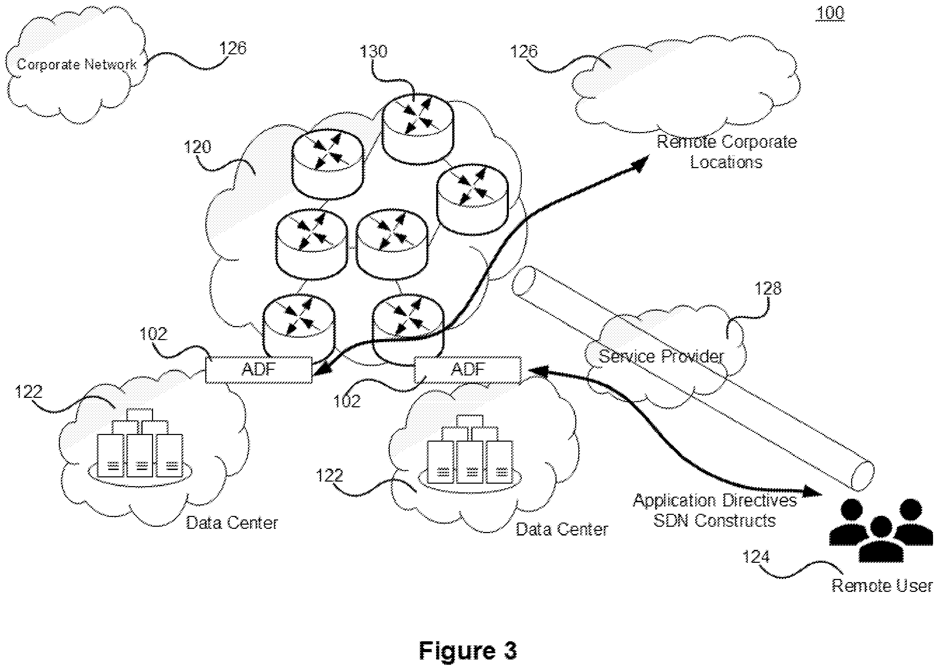

Figure 3 illustrates an exemplary embodiment of a network **100** employing an ADF **102** as discussed above. Instances of the ADF **102** are co-located within data centers **122** in private networks **120.** The applications **108** can be hosted within these data centers **122** and accessed both through a private network **120** connecting the data centers **122** to employees **124** at remote locations **126,** and through a 5G network service provider **128.** This can provide a hybrid environment **100** in which data center **122** resources are accessed through a secure and reliable private network **120,** and through a public network **128** whose connections can be made secure, but must also be provisioned so that there is sufficient connectivity and reliability to allow access to the applications **108.** Network elements (NEs) **130** both physical and virtual may be controlled by SDN controllers with authority over the respective domain. Both Control and Management Planes may be instantiated within this network deployment. The characteristics of the access to applications **108** within the data center **122** are defined by the ADF **102** associated with the data center **122.** When access is obtained from the remote locations **126,** through known connections, the ADF **102** can transmit instructions to an SDN controller **116** associated with those connections to ensure that the end to end connection between a remote location **126** and the application **108** is properly provisioned to provide access over a network connection having the characteristics that the application **108** was designed for. When access is initiated over a public network **128,** such as a 5G network, the ADF **102** responds to the connection with the UE **106** as described above, and determines network identification information associated with the UE connection. This network identification information may be associated with the UE **106,** the RAN through which the UE **106** is connecting, and the core network **104** to which the RAN is connected. The ADF **102** can then determine the available QoS levels **110** and select an appropriate level, or it can undertake the negotiation process outlined above. By establishing a QoS **110** for the connection between the UE **106** and the data center **122,** the ADF **102** allows the application **106** to be executed with the resources it was intended to support.

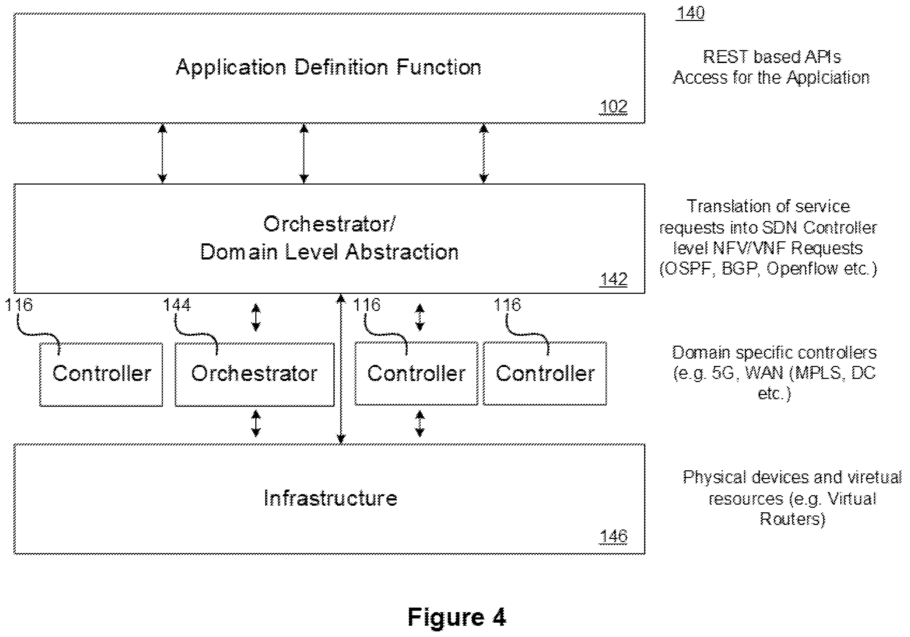

Figure 4 illustrates an architecture **140** where the ADF **102** corresponds with a domain level Orchestrator **142** for any number of different configuration parameters, including those associated with establishing a QoS level **110.** The ADF **102** may have similar relationships with different orchestrators **142** associated with different mobile networks. In some embodiments all interactions with an orchestrator **142** are defined through a single API, but it is possible for the ADF **102** to support different sets of APIs for different orchestrators. The Orchestrator **142** is typically a network entity in the management or control plane of the network. It communicates with orchestrators **144** and SDN controllers **116** for smaller partitions of the network. The smaller partitions may be geographically distinct segments of the network. In other embodiments they are at least partially overlapping network segments and slices. All of these smaller partitions, segments and slices are supported by an underlying network infrastructure **146.** In some embodiments this may be a virtualized infrastructure, which in turn is managed by an orchestrator **144** and controller **116.** At some layer though, a physical infrastructure underlies the entire network. This infrastructure may be owned by a plurality of different network operators or by a single entity. It should be understood that the networks described herein having a management or control plane are often referred to as managed networks as the connections between nodes or functions in the data plane are managed to provide security and a reliable quality of service.

The ADF **102,** sitting atop the entire network architecture **140** may rely upon a set of RESTful APIs to interact with the applications **108,** and a second set of RESTful APIs for interaction with the orchestrator **142.** In this way, the ADF **102** can respond to any received request, and transmit requests when needed, to either the application **108** or the orchestrator **142.** As noted above, the interface to the orchestrator **142** may involve communication through a proxy that acts to authenticate the communication with the ADF **102** to provide the network operators a level of security.

Interaction between the orchestrator **142** and any of the immediately lower orchestrators **144** and controllers **116** can be governed through a process unique to each carrier or network operator. However, this may also entail use of open standards for these communications including through use of protocols such as OpenFlow, BGP, requests for OSPF calculations, and other such requests. In some embodiments it may involve requests for reconfiguration of existing virtual nodes and connections, which may take the form of a VNF reconfiguration or instantiation request, which may be classified as a NFV instruction. These requests issued to the underlying controllers and orchestrators are determined in accordance with the requests received from the ADF **102.** This may involve authentication of the request (which as noted earlier may be done by another entity) and a translation of the request received.

Requests received by SDN Controllers **116** and Orchestrators **144** at a domain specific level are able to make use of the underlying infrastructure **146** to address the domain specific instructions received. By having the request broken down into domain specific instructions at the orchestrator **142,** it is possible to ensure that only the domains involved in the connection are provided information about the request. This can provide a degree of privacy, and may reduce the overall complexity by involving only relevant network segments, and it may also allow other network segments to operate undisturbed.

The underlying infrastructure **146** may only be only configured when a domain level controller **116** determines that it has the capacity for this request. In a hierarchical Orchestrator-SDN Controller deployment, each level is typically aware of the overall capacity of the domains below it, but not necessarily the capacity of the individual resources within the domain. Two adjacent domains with similar capacity, may have different usage patterns, and may thus respond with different implementations of the instructions received from a higher level orchestrator.

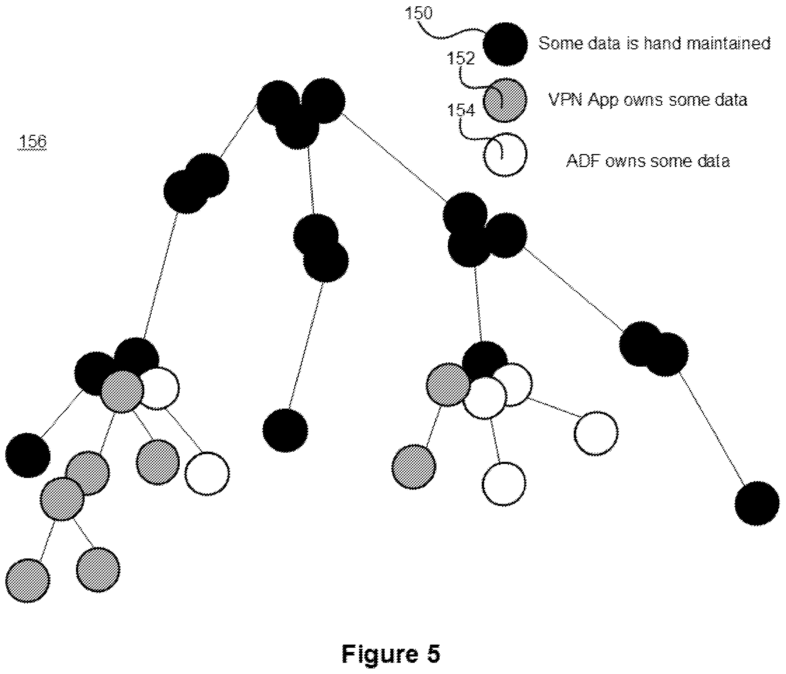

This spreads the responsibility for configuration of the network across layers. As shown in Figure 5 different configuration information **150, 152, 154** may be differently maintained. In a network **156** which uses network operator configuration of resource availability, some of this configuration information **150** will be effectively hand maintained. The Application **108** may contain some of the configuration data **152** associated with the type of connections and configurations it requires. For example, the application **108** may store information **152** associated with configuration of a proxy server through which the UE based application **108** component accesses an application server. The ADF **102** can also store configuration information **154** that has been provided by another network entity. In the above example of a proxy server, the ADF **102** may store configuration information **154**that associates a particular proxy server with a given Radio Access Network, so that a component of an application **108** executed on a UE **106** that connects to a first RAN will be directed to a first proxy server, and the proxy server will be provided the relevant configuration information **154.** When the same UE **106** connects to a different RAN, the ADF **102** can direct the UE **106** to a different proxy server, but still configure the new proxy server. The particular configurations associated with ADF maintained data **154** may be different between two different proxy servers, but this can be accommodated by providing the UE **106** with configuration information as well. The ADF **102** may also format instructions to different proxy servers differently based on the needs of the proxy server. In the event of a network outage, where connections need to be re-configured, between the Application **108** and the ADF **102,** information can be provided to a network orchestrator that allows it, with its knowledge of the network topology, to configure the links and virtual nodes to allow for bringing the UE-to-application connections back to life.

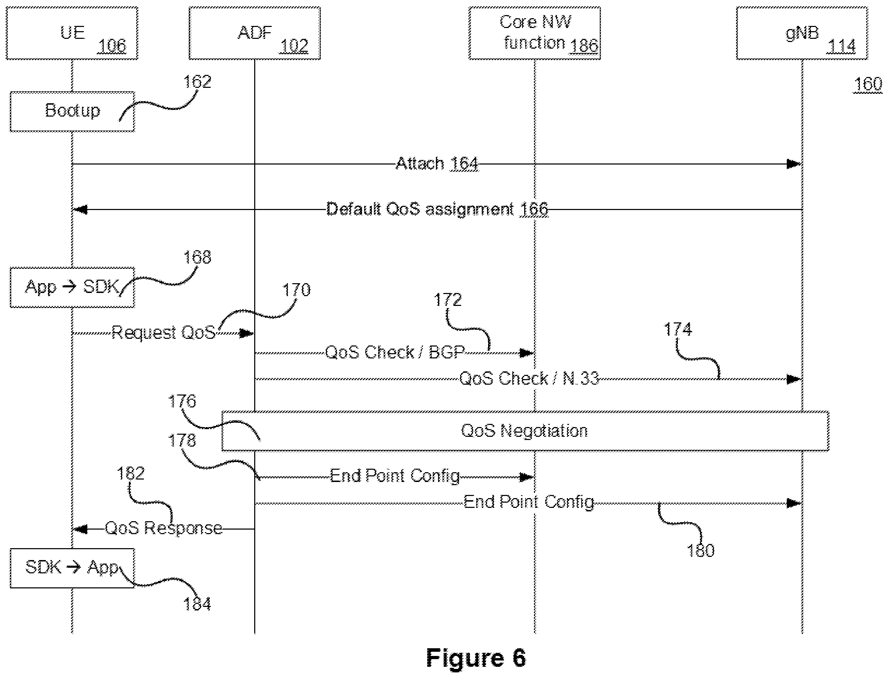

Figure 6 illustrates an exemplary call flow **160** in which the ADF **102** aids in the configuration of the UE-to-Application connection. The UE **106,** upon initiation or bootup **162,** issues an attach request **164** to the gNB **114,** which causes the UE **106** and gNB **114** to undertake a connection negotiation process that is well defined in the mobile network standards. This will provide the UE **106** with an over the air connection to the gNB **114** with a default QoS provided by a Default QoS assignment **166.** When the UE **106** initiates **168** an application **108,** which requires access to a resource accessed through the network with a defined QoS, the UE **106** (or an application **108** executed on the UE **106)** initiates a connection to the ADF **102** to request the required QoS **170.** This connection **170** to the ADF **102** provides the ADF **102** with certain information, including an identification of the network or gNB **114** to which the UE **102** is connected, and the application **108** with which it wants to connect (or an indication of an IP address to which it should connect with connection parameters that will define the necessary QoS).

The ADF **102** issues a QoS Check **172** with a network entity **186** (such as an orchestrator) to determine the available QoS levels. This may involve the ADF **102** providing connection requirements and receiving a 5G QoS Indicator (5QI) which is similar to the QCI used in earlier generations of networks including those under the LTE banner. Alternatively, there may be a request for a listing of the different QoS levels, allowing the ADF **102** to select one of the various QoS levels for use. A similar QoS check **174** may be transmitted to the gNB**114** . This message is optional if the ADF **102** is communicating with an entity that can address both QoS checks.

A QoS negotiation **176** between the ADF **102,** the gNB **114** and with core network functions **186,** such as BGP nodes may be undertaken. In some embodiments this is a negotiation with a control plane or management plane entity, such as an orchestrator that can configure the core network elements **186** and gNB **114** according to the result of the negotiation. The ADF **102** or the orchestrator can then send end point configuration information **178, 180** towards the core network elements **186** and the gNB **114** or other RAN elements.

A QoS response **182** can be sent to the UE **106** to allow for UE configuration **184.** In some embodiments this may be configured by the ADF **102** and sent to a management plane or control plane entity, so that a node within the core network control plane, such as an AMF or SMF, can transmit a configuration response to the UE **106.** A configuration response from the AMF or SMF may include a re-attach instruction causing the UE **106** to connect to a different network slice that supports the QoS levels it requires for this connection. It should be understood that the UE **106** does not necessarily have to drop an existing connection to the network if it can support access to multiple network slices.

At the end of this process, the UE **106** can connect to the Application **108** with a channel that has the characteristics required to allow the desired connection.

The ADF **102** as discussed herein allows for a number of different services to be provided. By acting as an abstraction layer between applications **108** and the network functions that carry out services relied upon by the applications, the ADF **102** can also insulate both the applications and network functions from changes in each other. In one example, applications submit requests to the ADF **102,** which then maps the request to specific network functions, and then transmits a request to the network function, formed in accordance with the received request but formatted for the selected network function. If the underlying network function is replaced with either an updated version of the network function, or by a comparable function from another vendor, this is hidden from the application. A change in the format of requests handled by the network function has no impact on the application. This allows the network operator to upgrade equipment, use equipment and software from different vendors, and relocate network functions without having to worry about these changes breaking the applications that rely on these functions. These changes are only made visible to the ADF **102,** and the ADF-to-application interface remains constant.

It should be understood that the interfaces between the ADF **102** and various network functions may make use of standardized interfaces to the NFs such as those detailed in 3GPP TS23.**501,** and may make use of corresponding procedures as outlined in TS23.**502.** It should also be understood that if the NF supports a proprietary interface that may offer additional functionality, the ADF **102** can support both the standardized and proprietary interfaces.

The ADF-to-Application interface may make use of a RESTful interface making use of standard HTTP messaging between the application **108** and the ADF **102,** it may make use of Javascript Object Notification (JSON), or any of a number of other messaging models. The API can be modified to provide access to new functionality in underlying network elements and functions, without breaking the design of the applications. In some embodiments, different versions of the ADF API may be maintained to allow for differentiated levels of control or to enable new functionality without rendering applications incompatible. The ADF-network element interface can, as noted above, make use of both standardized and proprietary interfaces where needed.

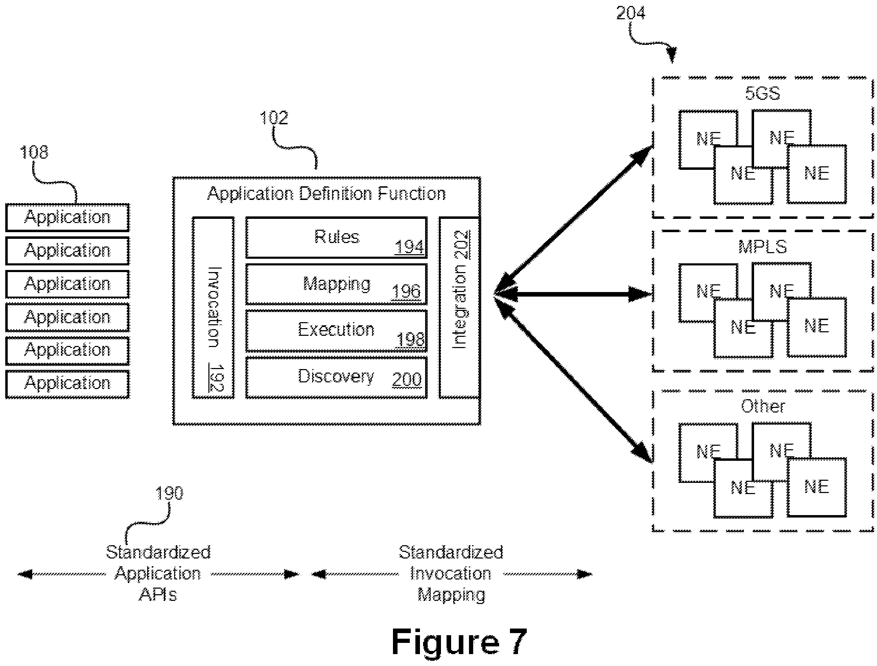

Figure 7 illustrates an abstract model of such an interface. A series of applications **108** can interact with the ADF **102** through a publicly defined API, which may take the form of a standardized application API **190.** This API **190** may be expanded and modified over time, but maintaining backward compatibility over time may provide maximum benefit to application developers. The network address associated with the ADF **102,** may remain constant over time or the ADF **102** can simply remain discoverable to the application **108.** When an application **108** connects to the ADF **102** it makes use of an invocation of the ADF functionality. This invocation interface **192** may also include a function that allows the ADF **102** to provide an API update to the application **108,** or to notify an application developer of updates to the API **190.**

The ADF **102** maintains a set of rules **194,** and mapping values **196** that allow it to process application requests to determine how they should be expressed in requests to the available network functions **204.** This may involve both discovery **200** of the network functions **204** currently available, and the execution **198** of the rules **194** associated with the discovered network function to determine if the application **108** or UE **106** has access to the discovered function **204,** before mapping **196** a received request to a generated request. Different network technologies and communication models may be used to interact with the network elements. If the network element in question has a defined 3GPP interface, the 3GPP networking interfaces may be used with standardized API calls. In some embodiments, network functions **204** may be selected and the ADF **102** may create a service chain of functions. This service chain can be defined using Source Routing, or (as illustrated) Multi-Protocol Label Switching (MPLS) which may help navigate parts of the service chain that are outside the bounds of the 3GPP network functions. Other network models and interactions can be supported using different protocols, without changing how the application submits requests or receives responses.

In many of the above discussions, network characteristics such as QoS have been discussed. It should be understood that this has been done for the sake of simplicity in explaining how one service characteristic is managed. Any request for network service that can be characterized and supported by underlying network elements **204** could be similarly handled by the ADF **102.** In one example, a high priority application **108** may interact with the ADF **102** to initiate a new network slice. In one such example, Law Enforcement or other such emergency service may have an application **108** that is only used in certain circumstances, but that provides access to a network slice to a limited number of UEs **106.** Depending on a geographic location of the initiating UE **106,** the underlying network elements **204** that would generate a new network slice may vary. The ADF **102** could receive a request for a service that should be carried over a new network slice. This service request may not specify that it should be a new network slice, but instead simply indicate a session ID that is not mapped to a slice. This can be treated as the application requesting a new slice. Subsequent application instances **108** on different UEs **106** may provide the same session ID, and then be provided the network slice ID generated for the initial request. This would allow for the generation of slices and the sharing of access to the slice to a limited number of entities, without requiring user configuration of an application on a UE.

As the situation associated with the creation of the network slice evolves, other application requests can be received that would modify characteristics of the network slice. These may include application calls for more bandwidth, different latency, different encryption or security functions, and other such characteristics. The ADF could receive the initial request and provide the requesting application with the required sessions without the UE or application being aware of whether a new network slice was being created, or if an existing one was being used.

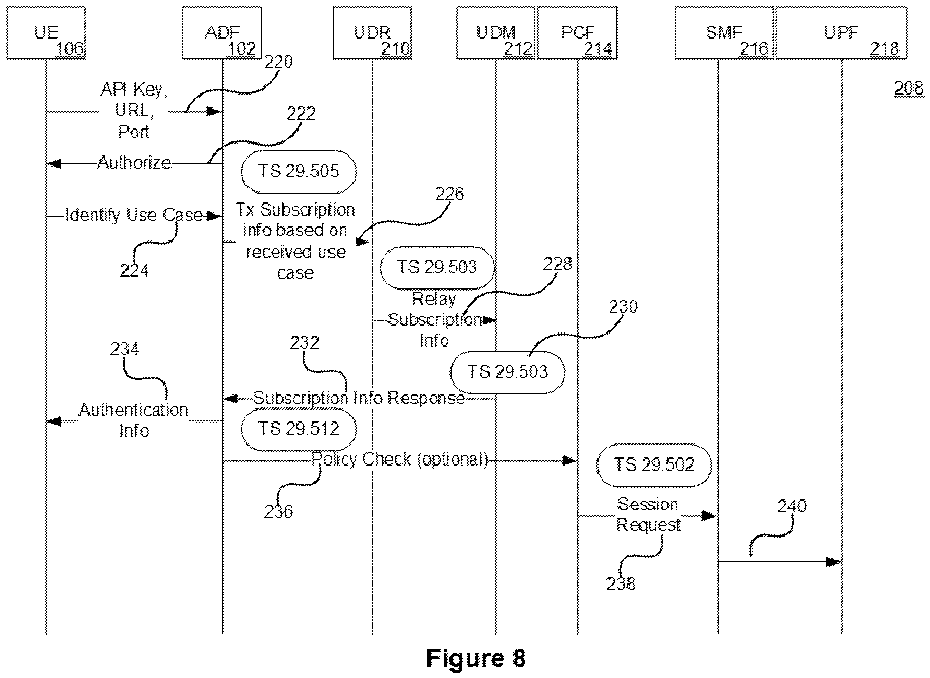

Figure 8 illustrates a call flow resulting from a method **208** that may be executed or driven by ADF **102.** ASD **102** receives from US **106** a message **220** identifying the API or API version that it is receiving (this may be explicitly or implicitly defined) along with a resource identifier (e.g. the URL and port number) for the application or the application server. The ADF **102** authenticates and authorizes the request, providing the UE **102** with an authorization message **222.** The UE then transmits a message **224** identifying the use case for the connection, which may be an identification of an existing use case in a standard document such as TS 29.**505.** Based on the received use case, the ADF **102** transmits a subscription request **226** to UDR **210,** this request may be formatted in accordance with TS 29.**505** in some embodiments. The UDR **210** relays the subscription request information **228** to the UDM **212,** which processes the request, for example, through defined procedures such as those defined in TS 29.**503.** A response **232** is then transmitted back to the ADF **102,** in some embodiments this is done in accordance with defined procedures. The ADF **102** then provides authentication information **234** to the UE **106,** and optionally transmits a policy check **236** to the PCF **214.** The PCF **216** cna then transmit a session request **238** to the SMF **216,** which then transmits a session initiation request **240** to the responsible UPF **218.**

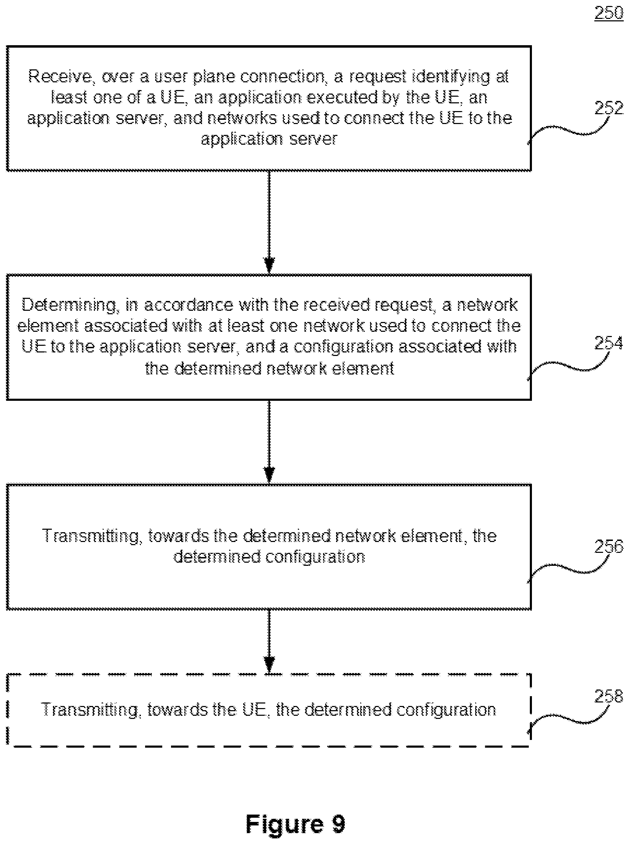

Figure 9 illustrates a flow chart of a method **250**that may be executed by an ADF **102** as described above. In a first step, the ADF **102** receives a request **252** from the UE **106** based application. This request is received over a user plane (also referred to as a data plane) connection. This request will typically contain information such as identification of a server that the UE **106** should connect to. This may also be deduced by the ADF **102** in accordance with an application identifier provided by the UE **106.** The network through which the UE **106** is connecting may also be explicitly identified, or it may be determined by the ADF **102.** Subsequently, the ADF **102** can identify **254** a network element that should be configured for the UE-to-Application Server connection. Then a configuration parameter associated with the network element can be identified and determined. This determination **254** can be done based on the requirements of the UE **106,** its application **108,** the resources available within the network, and the application server. The determined configuration, or configuration parameters, can then be transmitted **256** towards the network element, and in some optional embodiments a corresponding configuration can be sent to the UE **106** (over an existing user plane connection) **258.** The transmission **256** of the configuration parameters may be transmitted to the network element through one or both of a management plane or control plane node or function. In one such embodiment, the ADF **102** can transmit instructions identifying the network element and the required configuration information to a management plane entity. This may be part of a negotiation process or it can be a strict instruction. The management plane entity may send instructions to a network orchestrator that can either instantiate a network element, or re-configure an instantiated network element. Alternatively, the ADF **102** may transmit instructions to a management plane entity that communicates with a control plane function to implement the determined configuration. The ADF **102,** upon receipt of confirmation, can send instructions to the UE **106** so that the UE **106** will be able to properly make use of the configured network element. If the ADF **102** negotiated with a management plane or control plane entity, it may modify the instructions that it would have otherwise sent to the UE **106** or UE-based application.

Those skilled in the art will appreciate that in the above described flow chart, the ADF **102** may receive a request **252** from the application on the application server, and upon configuring the network elements, the ADF **102** may store this information so that any UE **106** connecting and requesting a connection configuration for a link between the UE **106** and application server, and immediately be provided with the established configuration information without having to perform a per-UE based configuration process.

Similarly, the ADF **102** may use similar but slightly modified versions of the above described flow chart for communications initiated by any number of other nodes, servers or functions within the network.

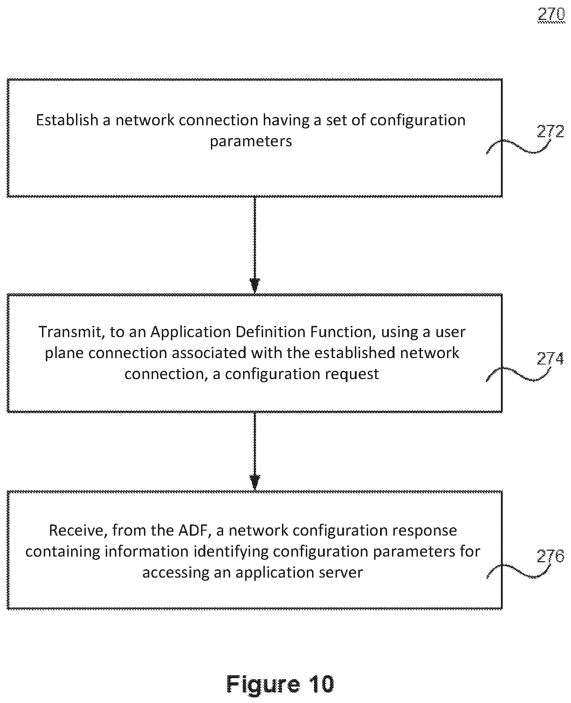

In Figure 10, a method **270** for execution by the UE **106** hosting an application **108** is illustrated. To start, the UE **106** establishes a connection to a network **272,** such as a RAN connected to a packet core network. In establishing **272** this network connection, the UE **106** is able to communicate with other nodes using a user plane connection for transmitting data. Using such a user plane connection, a request is transmitted **274** to the ADF **102.** This request may identify (explicitly or implicitly) an application server to which the UE hosted application **108** is to be connected to. The request may contain other information, including an explicit identification of the access network through which the UE **106** is connected, capabilities and capacities of the UE **106,** and other such relevant information. In response to transmitting this request, the UE **106** can expect to receive confirmation **276** from the ADF **102** in the form of a network configuration response that identifies the characteristics of the connection that has been established. In some embodiments, this may include an identification of a format that the application should use in communicating with the application server. Additionally, this may include identification of a particular server to connect to, a proxy server through which the application server should be accessed, or an instruction to reconnect to a different access network (possibly using provided credentials).

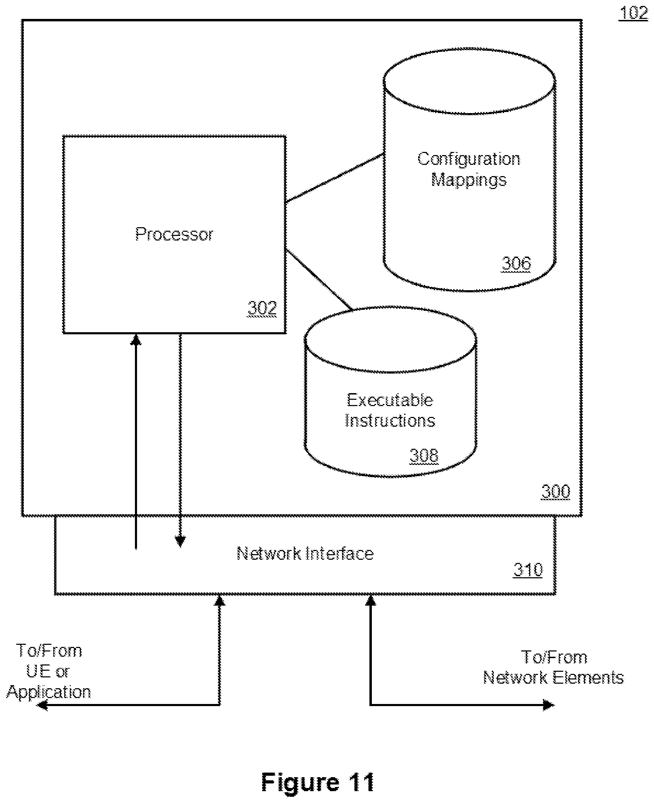

Figure 11 illustrates an exemplary configuration for a node **300** supporting the ADF **102** discussed above. The ADF **102** includes a network interface **310** through which the ADF **102** communicates to the UE **106** and network elements in any of the access network, the core network, and any other network between the UE **106** and the application server. The ADF **102** also includes a processor **302** which can execute instructions stored on readable media **308.** These instructions, when executed by the processor **302** cause the node **300** to act as the ADF **102** in accordance with the above description. Node **300** may be a generic computing platform (either a physical node or a virtualized node) to be turned into the ADF **102** and to carry out the methods discussed above. The ADF **102** may also include a stored mapping table **306** that allows user requests to be received in a given format to be mapped to instructions that are appropriate for a selected network element. It should be understood that even network elements carrying out the same function may have different requirements for receiving confirmation information, and thus the mapping between the UE-received requests and the network element specific configuration information may be network element dependent.

As noted above, the direct connections illustrated in the drawings are provided for exemplary purposes and should not be considered limiting of the scope of the invention, which is defined solely in the claims. Nodes that are illustrated as logically connected to each other need not be directly connected as illustrated, but are illustrated as being directly connected for the purposes of explanation.

## Claims

1. A method, comprising:
receiving (252), at an application definition function (102), from a first node (106) through a first connection outside a managed network (104), a connection request associated with a second connection between the first node (106) and a second node within the managed network (104);
generating (254), at the application definition function (102), in accordance with the received connection request, configuration information by mapping, using a mapping table, the received connection request to network element-specific configuration information for configuring a plurality of network elements within the managed network associated with the second connection; and
transmitting (256), from the application definition function (102), towards each network element within the managed network associated with the second connection, a connection configuration request associated with the generated network element-specific configuration information.

2. The method of claim 1, wherein the connection request received from the first node (106) outside the managed network is formatted in accordance with an outward facing Application Programming Interface.

3. The method of any one of claims 1-2, wherein the connection configuration request is
received from one of an application server, a user equipment node (106) connected to the managed network, a proxy for the application server or a proxy for the user equipment node; or
formatted in accordance with an Application Programming Interface associated with the network element; or
transmitted towards a network orchestrator (114) via a network entity (142) in the management plane; or
transmitted towards a user equipment node (106) connected to the managed network (104), and wherein the connection configuration request is a request for configuration of a connection associated with the user equipment node (106).

4. The method of claim 3, wherein the Application Programming Interface is different than the outward facing Application Programming Interface associated with the received connection request.

5. The method of any one of claims 1-4, wherein the request from the node outside the managed network (104) is received over the data plane of a network other than the managed network (104).

6. The method of claim 5, wherein the network element associated with the connection is within one of a control plane of the managed network or a management plane of the managed network (104).

7. The method of any one of claims 5-6, wherein the transmitting (256) the connection configuration request towards the network element comprises transmitting (256) the connection configuration request to a second network element within one of a control plane of the managed network (104) or a management plane of the managed network (104).

8. The method of claim 7, wherein the received connection request is received from the user equipment node (106) and wherein the connection configuration request is determined in accordance with a second request received from an application server outside the managed network (104).

9. The method of claim 8, wherein the received connection request is associated with a connection between the user equipment node (106) and the application server.

10. The method of any one of claims 1-9, wherein generating (254) configuration information comprises generating a set of configuration information data, each of the set associated with a different network element within the managed network (104); and transmitting a connection configuration request comprises transmitting to each of the different network elements a connection configuration request associated with the corresponding subset of the configuration information.

11. The method of any one of claims 1-10, wherein generating (254) the configuration information further comprises generating a Quality of Service Flow Indicator associated with the connection.

12. The method of any one of claims 1-11, wherein the managed network (104) is one of a 5G core network, a 5G Radio Access Network, an Edge Computing Network, a 4G core network, a radio access network, or a Wi-Fi network.

13. The method of any one of claims 1-12, wherein the connection between nodes within the managed network (104) comprises
a plurality of connections spanning different managed network segments; or
a connection associated with an Internet of Things device.

14. The method of claim 13, wherein connections in the plurality of connections comprise at least one of: a connection between a user equipment node (106) and a base station; a connection between a user equipment node (106) and a radio access point; a connection between a user equipment node (106) and a gNodeB (114); a connection between the gNodeB (114) and a User Plane Function; a connection between the gNodeB (114) and a gateway; a connection between two User Plane Functions, or a connection between a gateway and a User Plane Function.

15. An Application Definition Function (102) for generating connection configuration requests associated with connections within a managed network (104) in accordance with connection requests received from outside the managed network (104), the Application Definition Function (102) comprising:
a first network interface for receiving (252) connection requests from outside the managed network (104);
a second network interface for transmitting (256) connection configuration requests to a plurality of network elements within the managed network (104); and
a processor for executing instructions stored on a computer readable medium that when executed cause the Application Definition Function to carry out the method of any one of claims 1-14.

## Patentansprüche

1. Verfahren, umfassend:
Empfangen (252) einer Verbindungsanforderung von einem ersten Knoten (106), an einer Anwendungsdefinitionsfunktion (102), über eine erste Verbindung außerhalb eines verwalteten Netzwerks (104), die einer zweiten Verbindung zwischen dem ersten Knoten (106) und einem zweiten Knoten innerhalb des verwalteten Netzwerks (104) zugeordnet ist;
Erzeugen (254) von Konfigurationsinformationen in der Anwendungsdefinitionsfunktion (102) entsprechend der empfangenen Verbindungsanforderung, indem die empfangene Verbindungsanforderung unter Verwendung einer Zuordnungstabelle netzwerkelementspezifischen Konfigurationsinformationen zugeordnet wird, um eine Vielzahl von Netzwerkelementen innerhalb des verwalteten Netzwerks zu konfigurieren, das der zweiten Verbindung zugeordnet ist; und
Senden (256) einer Verbindungskonfigurationsanforderung, die den erzeugten netzelementspezifischen Konfigurationsinformationen zugeordnet ist, von der Anwendungsdefinitionsfunktion (102) an jedes Netzwerkelement innerhalb des verwalteten Netzwerks, das der zweiten Verbindung zugeordnet ist.

2. Verfahren nach Anspruch 1, wobei die von dem ersten Knoten (106) außerhalb des verwalteten Netzwerks empfangene Verbindungsanforderung gemäß einer nach außen gerichteten Anwendungsprogrammierschnittstelle formatiert wird.

3. Verfahren nach einem der Ansprüche 1 bis 2, wobei die Verbindungskonfigurationsanforderung
von einem Anwendungsserver, einem mit dem verwalteten Netzwerk verbundenen Benutzergeräteknoten (106), einem Proxy für den Anwendungsserver oder einem Proxy für den Benutzergeräteknoten (106) empfangen wird; oder
gemäß einer dem Netzwerkelement zugeordneten Anwendungsprogrammierschnittstelle formatiert ist; oder
über eine Netzwerkeinheit (142) in der Verwaltungsebene an einen Netzwerk-Orchestrator (114) gesendet wird; oder
an einen Benutzergeräteknoten (106) gesendet wird, der mit dem verwalteten Netzwerk (104) verbunden ist, und wobei die Verbindungskonfigurationsanforderung eine Anforderung zur Konfiguration einer dem Benutzergeräteknoten (106) zugeordneten Verbindung ist.

4. Verfahren nach Anspruch 3, wobei sich die Anwendungsprogrammierschnittstelle von der nach außen gerichteten Anwendungsprogrammierschnittstelle unterscheidet, die der empfangenen Verbindungsanforderung zugeordnet ist.

5. Verfahren nach einem der Ansprüche 1 bis 4, wobei die Anforderung von dem Knoten außerhalb des verwalteten Netzwerks (104) über die Datenebene eines Netzwerks empfangen wird, das ein anderes als das verwaltete Netzwerk (104) ist.

6. Verfahren nach Anspruch 5, wobei sich das der Verbindung zugeordnete Netzwerkelement innerhalb einer Steuerungsebene des verwalteten Netzwerks oder einer Verwaltungsebene des verwalteten Netzwerks (104) befindet.

7. Verfahren nach einem der Ansprüche 5 bis 6, wobei das Senden (256) der Verbindungskonfigurationsanforderung an das Netzwerkelement das Senden (256) der Verbindungskonfigurationsanforderung an ein zweites Netzwerkelement innerhalb einer Steuerungsebene des verwalteten Netzwerks (104) oder einer Verwaltungsebene des verwalteten Netzwerks (104) umfasst.

8. Verfahren nach Anspruch 7, wobei die empfangene Verbindungsanforderung von dem Benutzergeräteknoten (106) empfangen wird und wobei die Verbindungskonfigurationsanforderung gemäß einer zweiten Anforderung bestimmt wird, die von einem Anwendungsserver außerhalb des verwalteten Netzwerks (104) empfangen wird.

9. Verfahren nach Anspruch 8, wobei die empfangene Verbindungsanforderung einer Verbindung zwischen dem Benutzergeräteknoten (106) und dem Anwendungsserver zugeordnet ist.

10. Verfahren nach einem der Ansprüche 1 bis 9, wobei das Erzeugen (254) von Konfigurationsinformationen das Erzeugen eines Satzes von Konfigurationsinformationsdaten umfasst, wobei jede aus dem Satz einem anderen Netzwerkelement innerhalb des verwalteten Netzwerks (104) zugeordnet ist; und das Senden einer Verbindungskonfigurationsanforderung das Senden einer Verbindungskonfigurationsanforderung, die dem entsprechenden Teilsatz der Konfigurationsinformationen zugeordnet ist, an jedes der unterschiedlichen Netzwerkelemente umfasst.

11. Verfahren nach einem der Ansprüche 1 bis 10, wobei das Erzeugen (254) der Konfigurationsinformationen ferner das Erzeugen eines Dienstgüte-Flussindikators umfasst, welcher der Verbindung zugeordnet ist.

12. Verfahren nach einem der Ansprüche 1 bis 11, wobei das verwaltete Netzwerk (104) eines aus einem 5G-Kernnetzwerk, einem 5G-Funkzugangsnetzwerk, einem Edge-Computing-Netzwerk, einem 4G-Kernnetzwerk, einem Funkzugangsnetzwerk oder einem Wi-Fi-Netzwerk ist.

13. Verfahren nach einem der Ansprüche 1 bis 12, wobei die Verbindung zwischen Knoten innerhalb des verwalteten Netzwerks (104) umfasst:
eine Vielzahl von Verbindungen, die sich über verschiedene verwaltete Netzwerksegmente erstrecken; oder
eine Verbindung, die einer Internet-der-Dinge-Vorrichtung zugeordnet ist.

14. Verfahren nach Anspruch 13, wobei Verbindungen in der Vielzahl von Verbindungen mindestens eine der folgenden umfassen:
eine Verbindung zwischen einem Benutzergeräteknoten (106) und einer Basisstation;
eine Verbindung zwischen einem Benutzergeräteknoten (106) und einem Funkzugangspunkt;
eine Verbindung zwischen einem Benutzergeräteknoten (106) und einem gNodeB (114);
eine Verbindung zwischen dem gNodeB (114) und einer Benutzerebenenfunktion;
eine Verbindung zwischen dem gNodeB (114) und einem Gateway;
eine Verbindung zwischen zwei Benutzerebenenfunktionen, oder
eine Verbindung zwischen einem Gateway und einer Benutzerebenenfunktion.

15. Anwendungsdefinitionsfunktion (102) zum Erzeugen von Verbindungskonfigurationsanforderungen, die Verbindungen innerhalb eines verwalteten Netzwerks (104) zugeordnet sind, gemäß Verbindungsanforderungen, die von außerhalb des verwalteten Netzwerks (104) empfangen werden, wobei die Anwendungsdefinitionsfunktion (102) umfasst:
eine erste Netzwerkschnittstelle zum Empfangen (252) von Verbindungsanforderungen von außerhalb des verwalteten Netzwerks (104);
eine zweite Netzwerkschnittstelle zum Senden (256) von Verbindungskonfigurationsanforderungen an eine Vielzahl von Netzwerkelementen innerhalb des verwalteten Netzwerks (104); und
einen Prozessor zum Ausführen von Befehlen, die auf einem computerlesbaren Medium gespeichert sind und die bei Ausführung die Anwendungsdefinitionsfunktion veranlassen, das Verfahren nach einem der Ansprüche 1 bis 14 auszuführen.

## Revendications

1. Procédé, comprenant :
la réception (252), au niveau d'une fonction de définition d'application (102), en provenance d'un premier nœud (106) par l'intermédiaire d'une première connexion à l'extérieur d'un réseau géré (104), d'une demande de connexion associée à une seconde connexion entre le premier nœud (106) et un second nœud à l'intérieur du réseau géré (104) ;
la génération (254), au niveau de la fonction de définition d'application (102), conformément à la demande de connexion reçue, d'informations de configuration par mise en correspondance, à l'aide d'une table de mise en correspondance, de la demande de connexion reçue avec des informations de configuration spécifiques à l'élément de réseau pour configurer une pluralité d'éléments de réseau au sein du réseau géré associé à la seconde connexion ; et
la transmission (256), à partir de la fonction de définition d'application (102), vers chaque élément de réseau au sein du réseau géré associé à la seconde connexion, d'une demande de configuration de connexion associée aux informations de configuration spécifiques à l'élément de réseau générées.

2. Procédé selon la revendication 1, dans lequel la demande de connexion reçue en provenance du premier nœud (106) à l'extérieur du réseau géré est formatée conformément à une interface de programmation d'application orientée vers l'extérieur.

3. Procédé selon l'une quelconque des revendications 1 à 2, dans lequel la demande de configuration de connexion est
reçue de l'un parmi un serveur d'application, un nœud d'équipement utilisateur (106) connecté au réseau géré, un proxy pour le serveur d'application ou un proxy pour le nœud d'équipement utilisateur ; ou
formatée conformément à une interface de programmation d'application associée à l'élément de réseau ; ou
transmise vers un orchestrateur de réseau (114) par l'intermédiaire d'une entité de réseau (142) dans le plan de gestion ; ou
transmise vers un nœud d'équipement utilisateur (106) connecté au réseau géré (104), et dans lequel la demande de configuration de connexion est une demande de configuration d'une connexion associée au nœud d'équipement utilisateur (106).

4. Procédé selon la revendication 3, dans lequel l'interface de programmation d'application est différente de l'interface de programmation d'application orientée vers l'extérieur associée à la demande de connexion reçue.

5. Procédé selon l'une quelconque des revendications 1 à 4, dans lequel la demande provenant du nœud extérieur au réseau géré (104) est reçue sur le plan de données d'un réseau autre que le réseau géré (104).

6. Procédé selon la revendication 5, dans lequel l'élément de réseau associé à la connexion se trouve dans l'un parmi un plan de commande du réseau géré ou un plan de gestion du réseau géré (104).

7. Procédé selon l'une quelconque des revendications 5 à 6, dans lequel la transmission (256) de la demande de configuration de connexion vers l'élément de réseau comprend la transmission (256) de la demande de configuration de connexion à un second élément de réseau dans l'un parmi un plan de commande du réseau géré (104) ou un plan de gestion du réseau géré (104).

8. Procédé selon la revendication 7, dans lequel la demande de connexion reçue est reçue en provenance du nœud d'équipement d'utilisateur (106) et dans lequel la demande de configuration de connexion est déterminée conformément à une seconde demande reçue en provenance d'un serveur d'application extérieur au réseau géré (104).

9. Procédé selon la revendication 8, dans lequel la demande de connexion reçue est associée à une connexion entre le nœud d'équipement utilisateur (106) et le serveur d'application.

10. Procédé selon l'une quelconque des revendications 1 à 9, dans lequel la génération (254) d'informations de configuration comprend la génération d'un ensemble de données d'informations de configuration, chacune de l'ensemble étant associée à un élément de réseau différent dans le réseau géré (104) ; et la transmission d'une demande de configuration de connexion comprend la transmission à chacun des différents éléments de réseau d'une demande de configuration de connexion associée au sous-ensemble correspondant des informations de la configuration.

11. Procédé selon l'une quelconque des revendications 1 à 10, dans lequel la génération (254) des informations de configuration comprend en outre la génération d'un indicateur de flux de qualité de service associé à la connexion.

12. Procédé selon l'une quelconque des revendications 1 à 11, dans lequel le réseau géré (104) est l'un parmi un réseau cœur 5G, un réseau d'accès radio 5G, un réseau d'informatique en périphérie, un réseau cœur 4G, un réseau d'accès radio ou un réseau Wi-Fi.

13. Procédé selon l'une quelconque des revendications 1 à 12, dans lequel la connexion entre les nœuds au sein du réseau géré (104) comprend
une pluralité de connexions s'étendant sur différents segments de réseau géré ; ou une connexion associée à un dispositif de l'Internet des objets.

14. Procédé selon la revendication 13, dans lequel les connexions dans la pluralité de connexions comprennent au moins l'une parmi : une connexion entre un nœud d'équipement utilisateur (106) et une station de base ; une connexion entre un nœud d'équipement utilisateur (106) et un point d'accès radio ; une connexion entre un nœud d'équipement utilisateur (106) et un gNodeB (114) ; une connexion entre le gNodeB (114) et une fonction de plan utilisateur ; une connexion entre le gNodeB (114) et une passerelle ; une connexion entre deux fonctions de plan utilisateur, ou une connexion entre une passerelle et une fonction de plan utilisateur.

15. Fonction de définition d'application (102) pour générer des demandes de configuration de connexion associées à des connexions au sein d'un réseau géré (104) conformément à des demandes de connexion reçues de l'extérieur du réseau géré (104), la fonction de définition d'application (102) comprenant :
une première interface réseau pour recevoir (252) des demandes de connexion provenant de l'extérieur du réseau géré (104) ;
une seconde interface réseau pour transmettre (256) des demandes de configuration de connexion à une pluralité d'éléments de réseau au sein du réseau géré (104) ; et
un processeur pour exécuter des instructions stockées sur un support lisible par ordinateur qui, lorsqu'elles sont exécutées, amènent la fonction de définition d'application à mettre en œuvre le procédé selon l'une quelconque des revendications 1 à 14.
